# EUROPEAN PATENT SPECIFICATION

(11) **EP 0 882 975 B1**
(45) Date of publication and mention of the grant of the patent: **09.02.2005**
(21) Application number: 98303957.9
(22) Date of filing: 19.05.1998
(51) Int. Cl.: G01N 17/02

(54) **Testing cathodic protection of underground pipelines**
Überprüfung des kathodischen Schutzes von erdverlegten Rohrleitungen
Contrôle de la protection cathodique de conduites enterrées

(30) Priority: 03.06.1997 JP 14524797
(43) Date of publication of application: 09.12.1998
(73) Proprietor: TOKYO GAS CO., LTD., Minato-ku, Tokyo 105-0022 (JP)
(72) Inventor: Fumio, Kajiyama, Hanamigawa-ku, Chiba-shi, Chiba-ken (JP)
(74) Representative: King, James Bertram

(56) References cited:
- EP-A- 0 353 151
- EP-A- 0 494 012
- FR-A- 2 703 458
- GB-A- 2 025 056
- US-A- 4 806 850
- US-A- 5 216 370
- US-A- 5 469 048

## Description

This invention relates to a method of testing and evaluation, as well as apparatus and instrumentation, using steel probes and for the cathodic protection of underground pipelines.

It is known that the adequacy of an underground pipeline cathodic protection system is assessed by measuring potential and current of a steel probe placed near the pipeline at depth, that is under the same environmental conditions. A saturated copper/copper sulphate reference electrode (CSE) is also installed in the vicinity of the steel probe. The steel probe, simulating a coating defect, is electrically connected to a pipeline. Off-potential without IR-drop is measured with respect to a CSE by interrupting the steel probe and a pipeline connection. Recently, this method termed instant-off method has been widely used to assess cathodic protection conditions. Such methods are disclosed in GB-A-2 025 056 A and EP-A-0 494 012 A1.

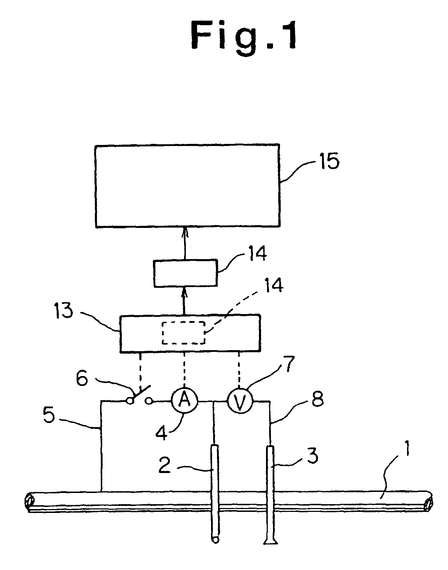

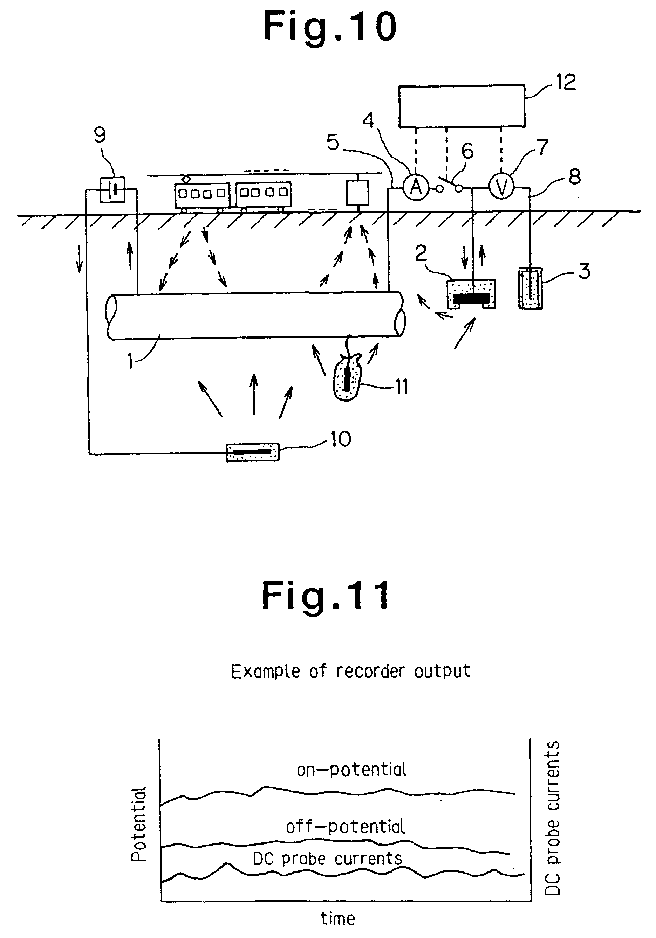

Referring to the drawings, introduced later herein, and specifically to Figure 10, a schematic of the method for measuring pipe-to-soil potential with a steel probe is shown. In Figure 10,1 is a pipeline, 2 a steel probe, 3 a CSE, 4 an ammeter in line 5 between a pipeline and a steel probe, 6 an on/off switch, 7 a voltmeter in line 8 between the steel probe 3 and CSE 4, 9 a DC source for cathodic protection, 10 an anode, 11 a sacrificial anode, and 12 a recorder.

In the above mentioned system, the adequacy of cathodic protection is assessed by measuring on-potential (pipe-to-soil) potential, off-potential, and current density. On-potential and current density are simultaneously obtained before interruption of the electrical connection between the steel probe and a pipeline. Off-potential is obtained after disconnection of the steel probe and pipeline intervals of 0.6 to 1.0 sec. in every 10 to 20 sec. by using an on/off switch 6. Time variations of on-potential, off-potential, and current density are recorded using a recorder 12. An example of the output data by a field study is shown in Figure 11.

However, some disadvantages regarding the above mentioned method arise as follows:
a) Original waveforms regarding on- and off-potentials, and probe currents are not obtained due to the use of a recorder with lowpass filter.
b) Off-potentials, DC and AC probe current densities are indispensable to assess the adequacy of cathodic protection. However, in the conventional method, off-potential of the steel probe is not accurately taken after disconnection of the steel probe and a pipe, when a significant problem with depolarisation is observed. Additionally, effective frequency in AC probe current density is not gained.
c) It is impossible to calculate data when the time averaged values are required, for example. because digital on- off-potentials, and DC and AC probe current densities are not acquired in the system.

To overcome the above mentioned issues (a) to (c), there has been proposed in Japanese Patent Application JP 8-345313A an evaluation method for cathodic protection of underground pipelines using a steel probe and a CSE near the pipeline at depth, by numerically analysing on- and off-potentials, and probe currents that are collected using a computer. The steel probe is electrically connected to a pipeline. Frequency analysis of collected data is performed, then levels of on- and off-potentials, and probe currents at effective frequencies are assessed.

Recently, buried pipelines tend to run parallel to electric transmission lines or railways. In such a case, a powerful magnetic field is generated between a pipeline and ground and a considerable voltage may be induced particularly in a well coated pipeline. The above mentioned patent does not directly refer to data regarding AC corrosion.

On the other hand, the present situation is that the buried environment of pipelines is becoming more and more aggressive and the opportunities for AC corrosion are being expanded.

According to this invention there is provided a method as claimed in claim 1.

This invention also provides a testing system defined in Claim 5.

The present invention is characterised in such a way that it provides an AC corrosion counter-measure by burying the steel probe and a CSE adjacent to the cathodically protected pipeline and measuring potential between the steel probe and a CSE and between the steel probe and the pipeline, and further by measuring the value of an AC between the steel probe and the pipeline in synchronism with this measurement timing and evaluating the DC corrosion level from these values and evaluating AC corrosion level from these values.

This invention is further described and illustrated with reference to the drawings, wherein:
- Figure 1: shows a diagram of a single test station of this invention,
- Figure 2: shows a schematic representation of measuring time of on-potential, off-potential and probe current,
- Figure 3: shows an explanatory diagram of display and calculation of on- and off-potentials,
- Figure 4: shows the behaviour of potential and current,
- Figure 5: shows an explanatory view of an original waveform of on-potential,
- Figure 6: shows the behaviour of on-potential and frequency spectrum,
- Figure 7: shows an example of probe current,
- Figure 8: shows a block diagram of an apparatus according to this invention,
- Figure 9: shows an explanatory drawing of the measurement method of this invention,
- Figure 10: shows an explanatory diagram of a known cathode protection arrangement, and
- Figure 11: shows an explanatory diagram of the cathode protection data obtained from Figure 10.

Referring to the drawings, Figure 1 shows a cathode protection unit relating to this invention, wherein 1 is a pipeline, 2 a steel probe, 3 a saturated copper/copper sulphate electrode (CSE) 4 an ammeter inserted into the line 5 connecting between the pipeline 1 and the probe 2, 6 is an ON/OFF switch and 7 a voltmeter inserted into the line connecting between the probe 2 and the reference electrode 3. For clarity a DC power source for cathodic protection, anode and sacrifice anode are omitted. In Figure 1, 13 is a cathodic protection monitor, and an IC card as a recording means (85 MB) 14 for recording the data is incorporated into this monitor 13, and stores the on- and off-potentials and probe current. The IC card 14 is connected with computer 15 for analysing the data obtained.

Hereinafter, the acquisition of data and the analysis of the numerical data is conducted using the computer 15 which is now explained.

### Cathode Protection Data Measurement & Analysis

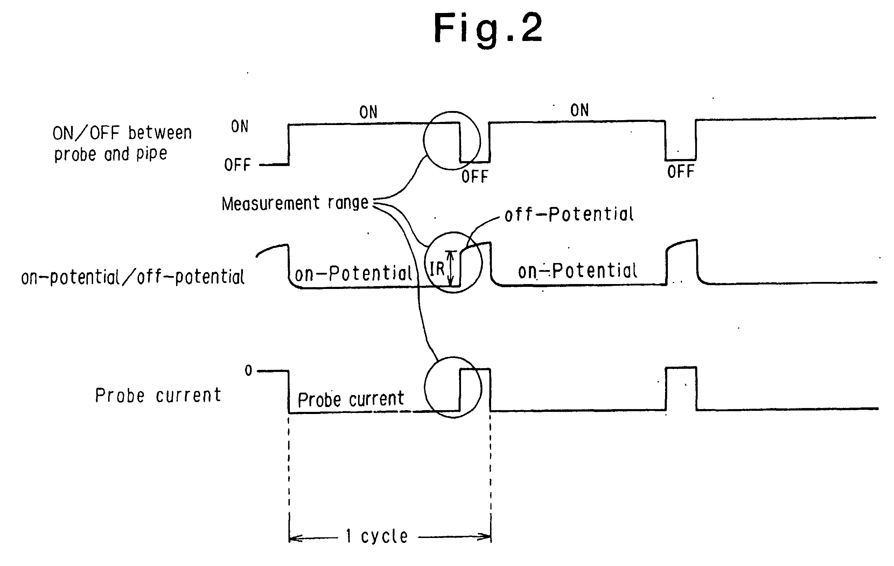

As shown in Figure 2, the measurement is taken for the data around the point of time when the probe 2 has changed from ON to OFF at all times. Generally, the ON time is very much longer than the OFF time, and basically the one cycle is set to 10s (seconds) with the ON time being 8.5s and the OFF time being 1.5s. For example, if the measurement time is over, or for, 2 minutes, it means that 1 cycle has been repeated. Basically, the time before OFF time and the time after the OFF time is set to 1s. The range within the time before OFF and the time after OFF is sampled every 0.1 ms for taking and capture of values of on-potential, off-potential and probe current as accurately as possible. Therefore, the amount of data for on-potential, off-potential and probe current becomes voluminous with as many as 120,000 data items recorded.

### 1) Display of on-potential.

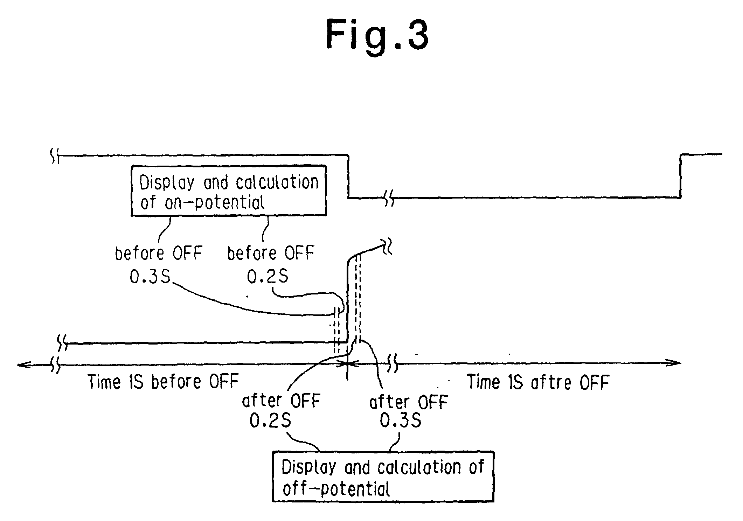

Within the range of time before the preset OFF, the on-potential to the measuring instrument is displayed and calculated (maximum value, minimum value and averaged value). Empirically, the range from 0.3s before OFF and 0.2s is optimum for the display and calculation of on-potential (see Figure 3). Therefore, because the time range of this 0.1s is being sampled at every 0.1 ms at one cycle, the total number of samplings becomes 1,000, and the maximum value, minimum value and averaged value in the 1,000 data are to be displayed.

### 2) Display of off-potential.

Within the range of time after the preset OFF, the OFF potential to the measuring instrument is to be displayed and calculated. Theoretically, the off-potential is the probe potential subtracting the IR (mainly the protective current and soil resistance) immediately after the OFF, but because empirically an abnormal current signal is entered in many cases immediately after the OFF, the evaluation shall be made between time range from 0.2s to 0.3s after the OFF. This becomes identical to the calculation of on-potential, which is to display the maximum value, minimum value and averaged value in 1,000 data at one cycle.

### 3) Display of probe current.

Because the probe current is to be evaluated under the ON status, it becomes identical to the measurement of on-potential.

The displays of said on- and off-potentials and probe current can be optionally set so long as the range is within the time before OFF and the time after OFF.

### Software and Output

For example, the measurement conditions are set as follows, these being standard.
- ON time:: 8.5s
- OFF time:: 1.5s
- 1 cycle:: 10s
- Measurement time:: 120s
- Time before OFF:: 1s
- Time after OFF:: 1s
- On-potential display measuring range:: 0.3 to 0.2s before OFF
- Off-potential display measuring range:: 0.2 to 0.3s after OFF
- Data sampling interval:: 0.1ms

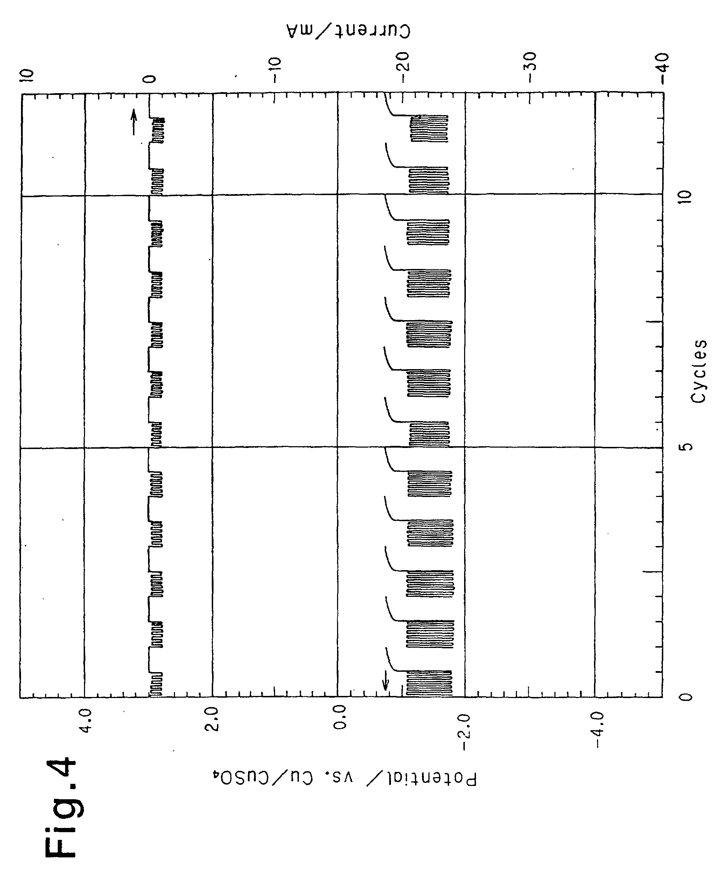

Then, because the time before OFF and the time after OFF are identical to each other, twelve cycles can be obtained as the output as the embodiment in Figure 4 shows with the OFF time between the probe 2 and the pipeline 1 as target. The reason why each cycle is intermittent is because the continuous measurement is actually being conducted. The maximum value, minimum value and averaged value of on- off-potentials and probe current within the preset range are displayed to the right side of Figure 4.

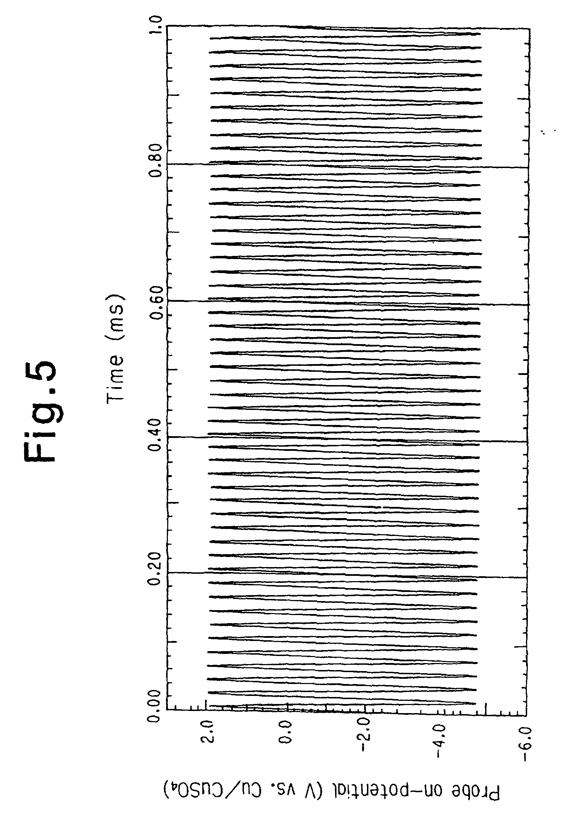

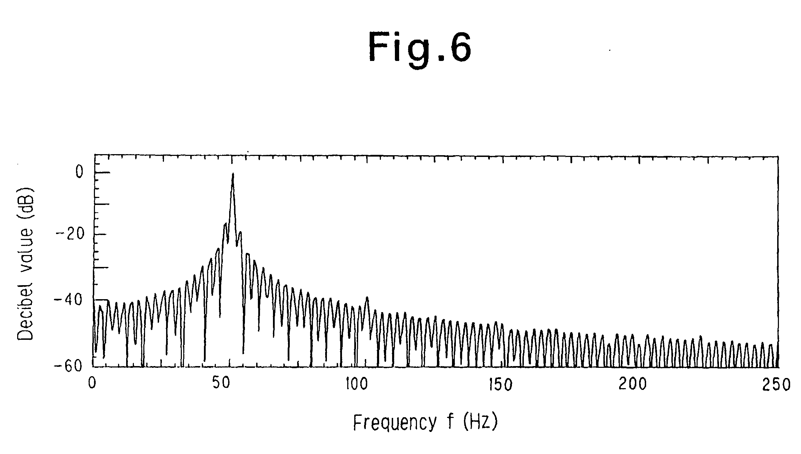

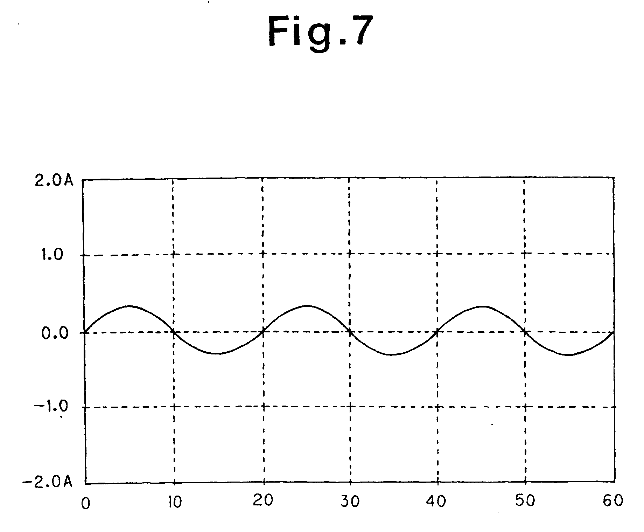

The sampling interval is set to 0.1 ms due to the following two reasons:
1) By capturing the original waveforms of on-potential and probe current when the steel probe is electrically connected to a pipeline, the cause of fluctuation can be specified in the frequency analysis, and moreover, evaluation of the adequacy of cathodic protection is performed by the analysis of the original waveforms of on-potentials and probe currents. Figure 5 is an explanatory view of original waveform of on-potential while Figure 6 displays a spectrum analysis of on-potential by the FFT (Fast Fourier Transformation). Effectively only the 50Hz component of the power-line frequency remains indicating the inductance of electric power transmission lines. What relates to the corrosion is the low frequency constituent from the probe current taken at the same time with the on-potential.
   In the present embodiment, the filter used for the FFT bases on the original wave form taken in 0.1 ms calculates and displays the averaged value of each constituent of 25 Hz, 50 Hz, 100 Hz, 200 Hz and 500 Hz. Figure 7 shows these embodiments.
2) Probe off-potential must be determined on the basis of the analysis of original potential waveform. This is the reason why the data sampling time 0.1 ms is required.

If the standard has not been satisfied in comparison with the following cathodic protection criteria as a result of analysing the numerical value, the disposal for decreasing AC voltage should be taken by lowering AC voltage of pipeline and by connecting the low earth substance to the pipeline. It is probable that the electromagnetic induction voltage is generated in the pipeline and AC corrosion may be induced.

### Criteria for cathodic protection using instant-off method with steel probes.

### 1. Under conditions without induced AC voltage

(a) at least-1.0 V CSE off-potential, or
(b) at least 0.010 mA/cm² DC probe current density.

### 2. Under conditions with induced AC voltage

Criteria for cathodic protection conditions with induced AC voltage have not yet been established. That is, the relationship between off-potential, DC probe cathodic current density, and AC probe current density is not well understood in order to prevent AC corrosion. However, proof that the corrosion rate is suppressed below 3.17 x 10⁻¹³ m/s (0.010 mm/y) has been obtained, when AC probe current density is lower than 5mA/cm². Because of this situation, the tentative criteria for cathodic protection are set forth; that is the above mentioned (1) and lower than 5mA/cm² averaged AC probe current density.

The present invention is to assess the adequacy of cathodic protection by evaluating DC components (on-potential, off-potential, and DC probe current density) together with AC probe current density.

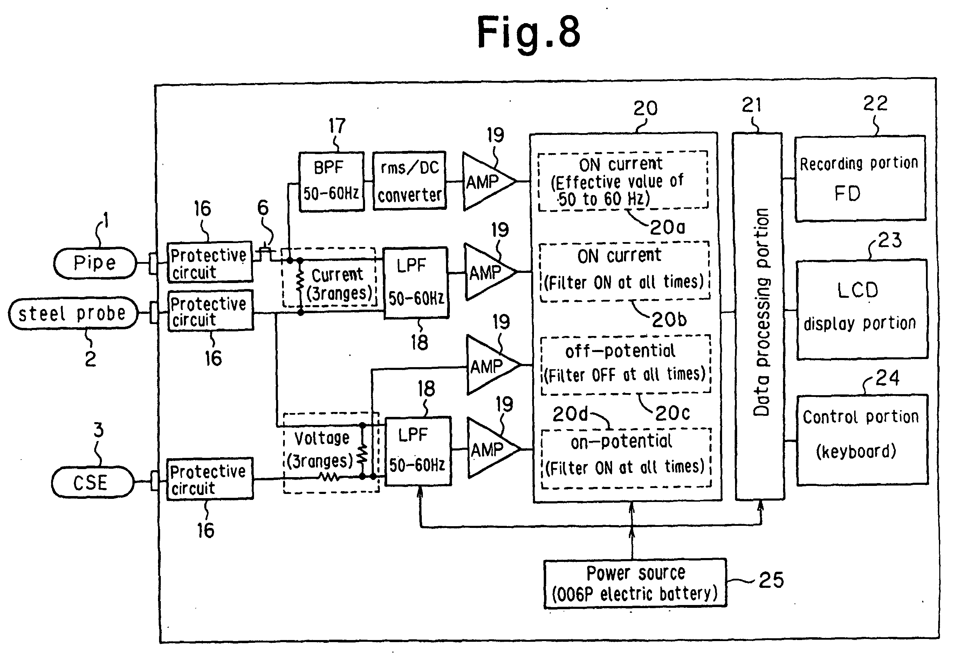

This method is expounded on the basis of Figure 8. In Figure 8, 1 is a pipeline, 2 a steel probe, 3 a CSE, 6 an ON/OFF switch, 16 a protective circuit, 17 a band pass filter, 18 a low pass filter, 19 an amplifier, 20 a measurement circuit, 20a an ON current (the effective value from 50 to 60 Hz zone) measuring portion, 20b is an ON current (the filter is ON at all times) measuring portion, 20c is an off-potential (the filter is OFF at all times) measuring portion, 20d is an on-potential (the filter is ON at all times) measuring portion, 21 is a data processing portion, 22 is a recording portion, 23 is an LCD display, 24 is a control portion (keyboard) and 25 is a power source.

In this instrumentation, after the disconnection of the steel probe and a pipeline, potential data are collected at the sampling time of 0.1 ms without lowpass and bandpass filters. The reason why the presented procedures are taken is because (1) the potential fluctuations of steel probe 2 are induced (it is assumed that the reason why there is a potential fluctuation is because the steel probe 2 is in a strong electromagnetic field) although the level of AC induction voltage is low even after the OFF under overhead high voltage electric wire, and (2) there is the need for capture of the original waveform since there is the depolarisation phenomenon of steel probe 2 after the OFF (the phenomenon where the steel probe 2 shifts in a higher direction.

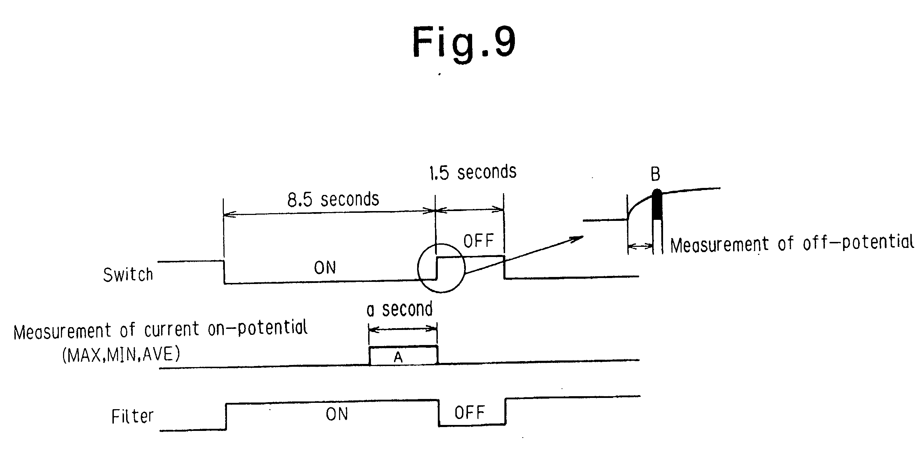

Figure 9 shows an explanatory view of the measurement method for estimating AC corrosion level with a steel probe interrupted at a cycle of 8.5-second on and 0.5-second off by using an ON/OFF switch 6, which is repeated for 120 seconds.

During this ON/OFF transition stage, the maximum value, minimum value and averaged value of probe on-potential and DC probe current is measured with the low pass filter 18 (cut-off frequency of 50 Hz) ON, and moreover the rms current of probe AC 50/60 Hz shall be measured with the band pass filter 17 ON, and further the probe off-potential (the averaged value of 0.1 ms sample data) shall be measured with the filter being OFF.

Symbol "A" in Figure 9 is the maximum, minimum and averaged value measurement (the probe rms current of on-potential, DC 50/60 Hz), and Symbol "B" is the averaged value of 0.1 ms sample data, whose start and end can be freely set in the control portion 24.

The said matter was measured 90 cycles for 15 minutes for both the "A" and "B" cases at a test station.

For information, the timing of 8.5 seconds for ON time and 1.5 seconds for OFF time is to avoid disturbing the influence of electric iron operation against the pipeline 1 (from the study result in the field thus far). However, in the case of overhead electric power transmission lines, on- and off-time does not have a significant meaning due to repeatable phenomena.

As described above, the present invention enables an engineer to evaluate the effect of induced AC voltage on a pipeline paralleling an electric power transmission line or a railway. Thereby, the pipeline integrity for cathodic protection will be ensured.

## Claims

1. Method for assessing the adequacy of a pipeline cathodic protection arrangement using a steel probe (2) and a saturated copper/copper sulphate reference electrode (3) installed at depth adjacent the pipeline (1), the steel probe (2) being electrically connected to the pipeline (1) through a cyclically operated on/off switch, an on-potential being sampled and measured between the steel probe (2) and the reference electrode (3) over an interval of time when said switch is on, and an off-potential being sampled and measured between the steel probe (2) and the reference electrode (3) over an interval of time when the switch is off, probe current densities being measured between the steel probe (2) and the pipeline (1), wherein measurements of both DC and AC probe current densities flowing between the steel probe (2) and pipeline (1) are carried out simultaneously with the on-potential measurement, and over the same interval of time, the DC probe current densities being obtained using a low pass filter, the AC probe current densities being obtained using a bandpass filter, off-potential being obtained by averaging the potential over a constant time interval after disconnection of the steel probe and a pipeline, and wherein the off-potential and the DC probe current density are used to evaluate DC corrosion, and both the DC probe current density and AC probe current density are used to evaluate AC corrosion.

2. Method in accordance with claim 1, **characterised in that** for 50 Hz induced frequency, off-potentials are obtained by averaging potential data collected at intervals of 0.1 ms from 10 ms to 30 ms after disconnection of the steel probe and a pipeline.

3. Method in accordance with claim 1, **characterised in that** for 60 Hz of induced frequency, off-potentials are obtained by averaging potential data collected at intervals of 0.1 ms from 10 ms to 26.7 ms after disconnection of the steel probe and a pipeline.

4. Method in accordance with any preceding claim, **characterised in that** the adequacy of protection is determined by at least -1.0 V off-potential and at least 0.010 mA/cm² DC probe current density without induced AC voltage, and by at least 0.010 mA/cm² DC probe current density and less than 5 mA/cm² averaged AC probe current density.

5. A testing system for assessing the adequacy of a pipeline cathodic protection arrangement using a steel probe (2) and a saturated copper/copper sulphate reference electrode (3) installed at depth adjacent the pipeline (1), the steel probe (2) being electrically connected to the pipeline (1) through a cyclically operated on/off switch (6), the system comprising first means (18, 19, 20d) to measure the on-potential between the steel probe (2) and the reference electrode (3) over an interval of time when said switch is on, second means (19, 20c) to measure the off-potential between the steel probe (2) and the reference electrode (3) over an interval of time when the switch is off, third means (17, 19, 20a) including a bandpass filter (17) to measure the AC current between the steel probe (2) and the pipeline (1) when the switch is on, fourth means (18, 19, 20b) including a low pass filter (18) to measure the DC current between the steel probe (2) and the pipeline (1) when the switch is on, measurements of both DC and AC probe currents between the steel probe (2) and pipeline (1) being carried out simultaneously with the potential measurement when the switch is on, and over the same interval of time, the second means averaging the potential over a constant time interval after disconnection of the steel probe and pipeline, and means to process the off-potential and the DC probe current density to evaluate DC corrosion, and to process both the DC probe current density and AC probe current density to evaluate AC corrosion.

6. A testing system in accordance with claim 5, **characterised in that** the first means for determining the on-potential includes a low pass filter.

## Patentansprüche

1. Verfahren zur Beurteilung der Adäquanz einer kathodischen Schutzanlage für Rohrleitungen unter Verwendung einer Stahlsonde (2) und einer gesättigten Kupfer/Kupfersulfat-Referenzelektrode (3), die tief im Erdboden in der Nähe der Rohrleitung (1) installiert ist, wobei die Stahlsonde (2) über einen zyklisch betriebenen Ein-/Aus-Schalter elektrisch mit der Rohrleitung (1) verbunden ist, wobei ein "Ein"-Potenzial zwischen der Stahlsonde (2) und der Referenzelektrode (3) über ein Zeitintervall des eingeschalteten Zustands des Schalters hinweg abgetastet und gemessen wird, und ein "Aus"-Potenzial zwischen der Stahlsonde (2) und der Referenz-Elektrode (3) über ein Zeitintervall des ausgeschalteten Zustands des Schalters hinweg abgetastet und gemessen wird, wobei Sondenstromdichten zwischen der Stahlsonde (2) und der Rohrleitung (1) gemessen werden, worin Messungen von zwischen Stahlsonde (2) und Rohrleitung (1) fließenden Gleichstrom- sowie Wechselstromdichten des Sondenstroms gleichzeitig mit der Messung des "Ein"-Potenzials vorgenommen werden, und über das selbe Zeitintervall hinweg, die Gleichstromdichten des Sondenstroms mittels eines Tiefpassfilters erhalten werden, die Wechselstromdichten des Sondenstroms mittels eines Bandpassfilters erhalten werden, das "Aus"-Potenzial durch Mittelung des Potenzials über ein konstantes Zeitintervall hinweg nach der Unterbrechung der Verbindung zwischen der Stahlsonde und einer Rohrleitung erhalten wird, und worin das "Aus"-Potenzial und die Gleichstromdichte des Sondenstroms zur Auswertung der Gleichstromkorrosion herangezogen werden, und sowohl die Gleichstromdichte als auch die Wechselstromdichte jeweils des Sondenstroms zur Auswertung der Wechselstromkorrosion herangezogen werden.

2. Verfahren nach Anspruch 1, **dadurch gekennzeichnet, dass** sich für eine induzierte Frequenz von 50 Hz "Aus"-Potenziale durch Mittelung von Potenzialdaten ergeben, welche in Intervallen von je 0,1 ms 10 ms bis 30 ms nach Unterbrechung der Verbindung zwischen der Stahlsonde und einer Rohrleitung erfasst wurden.

3. Verfahren nach Anspruch 1, **dadurch gekennzeichnet, dass** sich für eine induzierte Frequenz von 60 Hz "Aus"-Potenziale durch Mittelung von Potenzialdaten ergeben, welche in Intervallen von je 0,1 ms 10 ms bis 26,7 ms nach Unterbrechung der Verbindung zwischen der Stahlsonde und einer Rohrleitung erfasst wurden.

4. Verfahren nach einem der voranstehenden Ansprüche, **dadurch gekennzeichnet, dass** die Adäquanz des Schutzes durch ein "Aus"-Potenzial von mindestens 1,0 V und eine Gleichstromdichte des Sondenstroms von mindestens 0,010 mA/cm² ohne induzierte Wechselstromspannung, sowie durch eine Gleichstromdichte des Sondenstroms von mindestens 0,010 mA/cm² und eine gemittelte Wechselstromdichte des Sondenstroms von weniger als 5 mA/cm² bestimmt wird.

5. Prüfsystem zur Beurteilung der Adäquanz einer kathodischen Schutzanordnung für Rohrleitungen unter Verwendung einer Stahlsonde (2) und einer gesättigten Kupfer/Kupfersulfat-Referenzelektrode (3), die tief im Erdboden in der Nähe der Rohrleitung (1) installiert ist, wobei die Stahlsonde (2) über einen zyklisch betriebenen Ein-Aus-Schalter (6) elektrisch mit der Rohrleitung (1) verbunden ist, wobei das System folgendes umfasst: erste Mittel (18, 19, 20d) zur Messung des "Ein"-Potenzials zwischen der Stahlsonde (2) und der Referenzelektrode (3) über ein Zeitintervall des eingeschalteten Zustands des Schalters hinweg, zweite Mittel (19, 20c) zur Messung des "Aus"-Potenzials zwischen der Stahlsonde (2) und der Referenzelektrode (3) über ein Zeitintervall des ausgeschalteten Zustand des Schalters hinweg, dritte Mittel (17, 19, 20a) einschließlich eines Bandpassfilters (17) zur Messung des Wechselstroms zwischen der Stahlsonde (2) und der Rohrleitung (1) bei eingeschaltetem Schalter, vierte Mittel (18, 19, 20b) einschließlich eines Tiefpassfilters (18) zur Messung des Gleichstroms zwischen der Stahlsonde (2) und der Rohrleitung (1) bei eingeschaltetem Schalter, wobei Messungen sowohl von Gleichstrom- als auch Wechselstrom-Sondenströmen zwischen Stahlsonde (2) und Rohrleitung (1) gleichzeitig mit der Potenzialmessung bei eingeschaltetem Schalter und über das selbe Zeitintervall hinweg durchgeführt werden, wobei die zweiten Mittel das Potenzial über ein konstantes Zeitintervall nach der Unterbrechung der Verbindung zwischen Stahlsonde und Rohrleitung mitteln, und Mittel zur Verarbeitung des "Aus"-Potenzials und der Gleichstromdichte des Sondenstroms zur Auswertung der Gleichstromkorrosion, und zur Verarbeitung sowohl der Gleichstromdichte als auch der Wechselstromdichte jeweils des Sondenstroms zur Auswertung der Wechselstromkorrosion.

6. Prüfsystem nach Anspruch 5, **dadurch gekennzeichnet, dass** die ersten Mittel zur Bestimmung des "Ein"-Potenzials einen Tiefpassfilter aufweisen.

## Revendications

1. Procédé d'évaluation de l'adéquation d'un ensemble de protection cathodique de conduite à l'aide d'une sonde en acier (2) et d'une électrode de référence en sulfate de cuivre/cuivre saturé (3) installée à une profondeur adjacente à la conduite (1), la sonde en acier (2) étant électriquement reliée à la conduite (1) à l'aide d'un commutateur on/off actionné de manière cyclique, un potentiel de mise sous tension étant échantillonné et mesuré entre la sonde en acier (2) et l'électrode de référence (3) pendant un intervalle de temps pendant lequel ledit commutateur est enclenché, et un potentiel de mise hors tension étant échantillonné et mesuré entre la sonde en acier (2) et l'électrode de référence (3) pendant un intervalle de temps pendant lequel le commutateur est désenclenché, les densités de courant de la sonde étant mesurées entre la sonde en acier (2) et la conduite (1), dans lequel les mesures des densités de courant continu et de courant alternatif de la sonde circulant entre la sonde en acier (2) et la conduite (1) sont effectuées simultanément avec la mesure du potentiel de mise sous tension, et, pendant le même intervalle de temps, les densités de courant continu de la sonde étant obtenues en utilisant un filtre passe-bas, les densités de courant alternatif de la sonde étant obtenues en utilisant un filtre passe-bande, le potentiel de mise hors tension étant obtenu en moyennant le potentiel sur un intervalle de temps constant après le débranchement de la sonde en acier et d'une conduite, et dans lequel le potentiel de mise hors tension et la densité de courant continu de la sonde sont utilisés pour évaluer la corrosion par courant continu, et la densité de courant continu de la sonde et la densité de courant alternatif de la sonde sont utilisées pour évaluer la corrosion par courant alternatif.

2. Procédé selon la revendication 1, **caractérisé en ce que**, pour une fréquence induite de 50 Hz, les potentiels de mise hors tension sont obtenus en moyennant les données de potentiel collectées à des intervalles de 0,1 ms 10 ms à 30 ms après le débranchement de la sonde en acier et d'une conduite.

3. Procédé selon la revendication 1, **caractérisé en ce que**, pour une fréquence induite de 60 Hz, les potentiels de mise hors tension sont obtenus en moyennant les données de potentiel collectées à des intervalles de 0,1 ms 10 ms à 26,7 ms après le débranchement de la sonde en acier et d'une conduite.

4. Procédé selon l'une quelconque des revendications précédentes, **caractérisé en ce que** l'adéquation de la protection est déterminée par un potentiel de mise hors tension d'au moins -1,0 V et par une densité de courant continu de la sonde d'au moins 0,010 mA/cm² sans tension alternative induite, et par une densité de courant continu de la sonde d'au moins 0,010 mA/cm² et une densité de courant alternatif moyenne de la sonde de moins de 5 mA/cm².

5. Système de test pour évaluer l'adéquation d'un ensemble de protection cathodique de conduite en utilisant une sonde en acier (2) et une électrode de référence en sulfate de cuivre/cuivre saturé (3) installée à une profondeur adjacente à la conduite (1), la sonde en acier (2) étant électriquement reliée à la conduite (1) à l'aide d'un commutateur on/off actionné de manière cyclique (6), le système comprenant un premier moyen (18, 19, 20d) pour mesurer le potentiel de mise sous tension entre la sonde en acier (2) et l'électrode de référence (3) pendant un intervalle de temps pendant lequel ledit commutateur est enclenché, un second moyen (19, 20c) pour mesurer le potentiel de mise hors tension entre la sonde en acier (2) et l'électrode de référence (3) pendant un intervalle de temps pendant lequel le commutateur est désenclenché, un troisième moyen (17, 19, 20a) comprenant un filtre passe-bande (17) pour mesurer le courant alternatif entre la sonde en acier (2) et la conduite (1) lorsque le commutateur est enclenché, un quatrième moyen (18, 19, 20b) comprenant un filtre passe-bas (18) pour mesurer le courant continu entre la sonde en acier (2) et la conduite (1) lorsque le commutateur est enclenché, les mesures des courants continu et alternatif de la sonde entre la sonde en acier (2) et la conduite (1) étant effectuées simultanément avec la mesure du potentiel lorsque le commutateur est enclenché, et pendant le même intervalle de temps, le second moyen moyennant le potentiel pendant un intervalle de temps constant après le débranchement de la sonde en acier et de la conduite, et un moyen pour traiter le potentiel de mise hors tension et la densité de courant continu de la sonde afin d'évaluer la corrosion par courant continu, et pour traiter la densité de courant continu de la sonde et la densité de courant alternatif de la sonde afin d'évaluer la corrosion par courant alternatif.

6. Système de test selon la revendication 5, **caractérisé en ce que** le premier moyen pour déterminer le potentiel de mise sous tension comprend un filtre passe-bas.
